# EUROPEAN PATENT APPLICATION

(11) **EP 3 225 597 A1**
(43) Date of publication of application: **04.10.2017**
(21) Application number: 16162531.4
(22) Date of filing: 29.03.2016
(51) Int. Cl.: C02F 9/00

(54) **CONTINUOUS WATER REGENERATION PROCESS IN SEMI-CLOSED CIRCUITS FOR THE RECIRCULATING AQUACULTURE INDUSTRY AND SYSTEM FOR PERFORMING SAID PROCESS**

(71) Applicant: Apria Systems, S.L., 39609 Revilla de Camargo (Cantabria) (ES)
(72) Inventor: GOMEZ RODRIGUEZ, Pedro Manuel, 39478 Arce (ES); IBÁÑEZ MENDIZÁBAL, Raquel, 39700 Castrourdiales (ES); URTIAGA MENDÍA, Ana Maria, 39011 Santander (ES); ORTIZ URIBE, Inmaculada, 39012 Santander (ES)
(74) Representative: Monzón de la Flor, Luis Miguel

(57) **Abstract**

Regeneration process and system for culture water, whether of marine origin or freshwater, which comprises the following steps:
i) pre-treatment by means of filtration;
ii) treatment by means of electro-oxidation, wherein the residence time is less than 1 second;
iii) a treatment by means of an activated carbon column;
iv) continuous analysis of the concentration of free chlorine/total chlorine at the outlet of the activated-carbon post-treatment;
v) continuous, automatic monitoring of the content of total ammonia nitrogen, wherein the habitual concentration in the water used is less than 1 mg/l.

The system comprises filtration means, an electro-oxidation reactor and an activated carbon column, successively connected, and each reactor is equipped with tens/hundreds of hydraulic channels per reactor (anode-cathode pairs), and a flow meter at the reactor inlets. The process makes it possible to increase the biomass density; to biologically control the pathogenic organisms; and to reduce the water exchanged and the energy consumption.

## Description

### OBJECT OF THE INVENTION

As specified in the title, the object of the present invention is a continuous water regeneration process in semi-closed circuits for the recirculating aquaculture industry, i.e. that used in aquaculture activities, as well as the system for performing said process. The continuously regenerated water may be of marine or fresh water origin.

The present invention is characterised by the special characteristics of each of the steps in the process, the joint application of the steps in an integrated manner, and the fact that it is designed for the regeneration of water in semi-closed circuits, which allows for a highly efficient elimination of the main contaminants present in these culture systems:
i) the close to 100% elimination of total ammonia nitrogen and nitrite, which favours their preferential conversion into molecular nitrogen, thereby minimising the formation of nitrates;
ii) disinfection of the water by reducing undesired bacterial colonies and viruses by up to approximately 99.9% (log 3 CFU/ml);
iii) oxidation of the soluble organic matter until it is completely mineralised.

Thanks to the high efficiency in the elimination of this wide range of contaminants, it is possible to reduce the external consumption of renewal water that enters these culture systems, and the consequent formation of wastewater, as well as to significantly increase the capacity and flexibility of the culture systems, thereby contributing to improving their productivity. Both results make it possible to compensate for the cost overruns in investment, operation and maintenance incurred by the regeneration system, as compared to the conventional systems that are currently more widely used in the industry.

The present invention pertains to the field of water regeneration processes in the aquaculture industry and, specifically, the degradation of the main contaminants present in Recirculating Aquaculture Systems (RAS) into substances with low or zero toxicity without the need to add chemical substances.

### BACKGROUND OF THE INVENTION

Aquaculture is a production sector that has undergone high growth in recent years, with an approximate average annual increase of 8.9% since 1970. Production in fish farms is directly dependent upon the quantity of water and its quality; Recirculating Aquaculture Systems (RAS), which appeared within the framework of the intensification of cultures, make it possible to minimise the consumption of water, thanks to its partial reuse, as well as to considerably increase energy savings.

In general, aquaculture systems produce high quantities of total ammonia nitrogen (TAN) due to the high protein content of the feed, resulting in the generation of 5%-8% of TAN with respect to the total quantity of feed supplied. The ammonia fraction pertaining to the TAN in the culture water is toxic, and its effects are dependent on the characteristics of the species cultured, their size, etc. The accumulation of toxic substances, and the habitual appearance of concentration peaks associated with the handling of the facilities and feeding/excretion rates, determine the design and management criteria for specific treatment plants. These criteria become critical in RAS systems, since the quantity of biomass per unit of volume is larger and, therefore, the water quality degradation is significantly faster.

Conventionally, the water recirculated in RAS systems is treated by means of an initial primary treatment, intended to eliminate the solids, generally by means of a physical process (grinding, sedimentation, sand filtration, etc.). Subsequently, it is necessary to eliminate the total ammonia nitrogen and the soluble organic matter from the treated water; the most widely used technology is based on the use of biofilters. In some cases, following the biofiltration, a disinfection step is performed by means of ozonation technology or ultraviolet light. Finally, the culture tank receives a continuous supply of oxygen/air and clean renewal water.

Biofiltration technology refers to the filtration techniques used by living organisms to degrade the compounds present in aqueous solutions. In RAS systems, biofiltration involves the biological oxidation of ammonia to nitrite and, subsequently, of nitrite to nitrate, by means of the so-called nitrification process; in biofilters, a denitrification process may also be performed, wherein the nitrate is anaerobically reduced to nitrogen gas. A recent study published by Diaz et al., "Kinetics of nitrogen compounds in a commercial marine Recirculating Aquaculture System", Aquacultural Engineering 50 (2012), Elsevier Science Publishers B.V., Amsterdam, pp. 20-27, showed that the TAN elimination efficiency, in RAS for marine water using biofilters, is variable and dependent upon the inlet concentration. The maximum total ammonia nitrogen elimination rate observed by said authors for this type of systems was 0.64 g N-NH₄⁺ m⁻²d⁻¹, considering inlet concentrations greater than 3.5 g N-NH₄⁺m⁻³.

In order to improve the efficiency associated with the toxic substance elimination process, alternative technologies have been considered for the treatment of culture water. These alternatives include: selective ion exchange, flocculation or oxidation by chemical methods. The latter group of technologies includes ozonation; the work published by S.T. Summerfelt, "Ozonation and UV irradiation - an introduction and examples of current applications", Aquacultural Engineering 28 (2003), Elsevier Science Publishers B.V., Amsterdam, pp. 21-36, demonstrates the capacity of ozonation to eliminate a large part of the viruses/bacteria present in the culture water and even to partially degrade the TAN (at high dosages). However, due to the variability in the characteristics of the water to be treated, frequently small overdoses of ozone are applied, which may have negative effects on the culture. The genetic damage associated with the ozonation byproducts are not well known yet, although some results show that they may entail an alteration in fish health and, consequently, a decrease in the productivity of the RAS system. The use of this technique in marine waters has been studied by M.S. Tango and G. A. Gagnon, "Impact of ozonation on water quality in marine recirculation systems", Aquacultural Engineering 29 (2003), Elsevier Science Publishers B.V., Amsterdam, pp. 125-137, who conclude that it is severely limited due to the potential formation of bromates during the oxidation of the bromides by ozone. Bromates are carcinogenic species for human beings and have a chronic impact on the health of the fish. Other disadvantages of ozonation are the high operation and instrumentation costs and the use of chemical products for the proposed treatment system.

An emerging alternative, without industrial implementation, for the treatment of water contaminated with nitrogenated compounds is electro-oxidation. Its potential application in RAS systems has been studied by Díaz et al., "Kinetics of electro-oxidation of ammonia-N and COD from a recirculating aquaculture saline water system using BDD anodes", Water Research 45 (2011), Elsevier Science Publishers B.V., Amsterdam, pp. 125-134. The elimination of the compounds is performed in such a way that the generation of secondary waste is minimised; furthermore, the variability in the flow rates, concentrations and characteristics of the water to be treated is not a disadvantage for the process. Electro-oxidation takes advantage of: (i) the high salinity of marine water, which increases the conductivity whilst decreasing energy consumption, and (ii) the high concentration of chloride in sea water, which improves the indirect oxidation of the contaminants and reduces the formation of chlorates and perchlorates resulting from the possible oxidation of the chlorides.

There are numerous patents related to water treatment processes and systems, such as those that appear under the following patent families: US20150090670, US2014106437, WO2012167375, US2013299434, CN104860397, CN104396815, CN103493769, CN1864480, JPH0324683, CN1519208, WO2012012647, WO2012066554.

There are also several documents in the state of the art related to the treatment of water originating from recirculating aquaculture processes, such as the following patents: US20150090670, US2014106437, WO2012167375, US2013299434, CN104860397, CN104396815, CN103493769, CN1864480, JPH0324683, CN1519208, WO2012012647, WO2012066554.

Although all the aforementioned patents relate to treatment processes that are applicable to recirculating aquaculture, they present certain aspects that may be considerably improved. The systems related to the state of the art have various disadvantages, such as, for example:
- Typically, they are designed to treat small volumes or low flow rates of water with moderate/high concentrations of contaminants to be eliminated, thanks to their high efficiency, but also because of their high investment cost. However, the regeneration of culture water in recirculating aquaculture systems requires that the elimination rate of the contaminants in the regeneration system compensates for the production thereof in the culture tanks, thereby preventing their accumulation and the consequent toxic effect on the species cultured. This objective must be fulfilled by maintaining, at all times, a minimum concentration of said contaminants in the culture system; this is as an essential requirement, which means that the only way to achieve it is by means of a high recirculation flow rate to and from the regeneration system, regardless of the elimination efficacy.
- They lack procedures for the continuous adjustment of the electrochemical treatment intensity at the variable contaminant loading rate of the species cultured, due to the slowdown/acceleration in their metabolism during the typical daily feeding/fasting cycles. Due to this lack, the treatment system may lead to the formation of excess oxidation byproducts, as well as to non-optimised energy consumption.
- Their operation is not safe, since they are not equipped with a continuous monitoring system for the concentration of toxic byproducts at the outlet of the regeneration system. The absence of this system means that byproducts like free chlorine may reach the culture tanks in the event of anomalous operation of the regeneration system and cause irreversible damage during a period of time as short as 1 hour.
- Lack of instruments to prevent the supply of electric current to the electrochemical reactors when water is not circulating through them, which would cause irreversible damage.

To sum up, none of the systems described above are designed in such a way to allow for the regeneration of the water present in the circuits of recirculating aquaculture in a safe and efficient manner, and with a high capacity, which would reduce the flow of renewal water and the production of wastewater, as well as considerably increase the capacity and productivity of recirculating culture systems.

The situation aforedescribed shows the need to develop new industrial-scale processes for the treatment of the culture water associated with RAS systems. The objective of these new processes is to minimise the presence of toxic substances, whilst maintaining a constant treatment efficacy despite the variability in the operating conditions.

Therefore, the object of the present invention is to develop a process and a system that operate safely, with a high efficiacy and a high treatment capacity, such as the one described below, which is essentially explained in the first claim.

### DESCRIPTION OF THE INVENTION

The object of the invention is a continuous water quality regeneration process used in semi-closed circuits in the recirculating aquaculture industry.

The regeneration has a multiple objective:
i) to prevent the water from losing the necessary quality to be used in the circuit, by minimising the risk that it reaches the condition of wastewater and has to be sent to a waste water treatment process prior to discharge into the media. This condition makes it possible to reduce not only the generation of wastewater, but also the consumption of freshening water to replace said wastewater;
ii) to increase the efficiency as compared to other treatment processes used in this type of recirculating aquaculture, by eliminating contaminants more quickly and, consequently, allowing for an increase in the productivity of these companies, since this would contribute to maximising the quantity of biomass cultured per unit volume of water in the culture tanks.

The invention comprises the following steps: pre-filtration of the water to be treated; electro-oxidation; elimination of the toxic byproducts in an activated carbon column.

During the entire process, it is recommended that the content of total ammonia nitrogen in the water used in the culture systems be less than 1 mg I⁻¹. This has significant implications when designing the operation in order for it to resolve the technical problem in an effective, efficient manner. The elimination of contaminants at the same rate that they are produced as a result of fish metabolism, ensuring that the concentration thereof remains at very low values, is only possible by delivering high flow rates of water to the regeneration system. Therefore, the design requirements for the electrochemical reactor are different than those used in the state of the art, namely:
- Due to the low concentration of contaminants, the residence time required in the reactor is less than 1 second, clearly lower than the necessary time specified in other documents in the state of the art; this results in typical reactor lengths of 1 metre, as compared to several metres in other reactors, such as the one described in patent US2015090670.
- On the other hand, the necessary reactor for the invention presents tens and even hundreds of hydraulic channels per reactor (anode-cathode pairs), which makes it possible to feed very high flow rates, as required by the application, as compared to US2015090670, which typically only includes one hydraulic channel per reactor. This design makes it possible to operate at low linear velocities despite the high flow rates and, therefore, reduces the necessary equivalent pumping height to make the water circulate through said reactor (lower energy consumption and less mechanical stress in the electrodes).

Other essential requirements for the process are:
- Continuous analysis of the concentration of free chlorine/total chlorine at the outlet of the activated carbon post-treatment.
- Continuous, automatic monitoring of the content of total ammonia nitrogen in the water, the result whereof may be used to automatically adjust the current intensity to be supplied to the reactor.

The technical effects arising from the requirements described above are:
- As a result of the continuous analysis of the concentration of free chlorine/total chlorine at the outlet of the activated carbon post-treatment, the following is obtained:
   o Safe operation, which prevents any problem that may arise during the post-treatment process (filter exhaustion or saturation, obstruction, etc.) from generating mortality in the culture system. In pilot-scale system, validation tests performed on a hatchery-type facility with 2-4 g sea bream fingerlings, the incorrect operation of the post-treatment process generated mortality (100%) in a period of time as short as 1 hour. Therefore, the correct operation of the treatment system for this application requires continuous, automatic monitoring of the free chlorine/total chlorine every few minutes, and it is not viable for an operator to perform it manually due to the required frequency for safe operation.
- The automatic adjustment of the current intensity to be supplied to the reactor achieves the following:
   o It prevents the reactor from generating a large excess of oxidants at the outlet thereof, due to an extremely low concentration of contaminants in the inlet water as a consequence of the daily variation in the metabolic activity of the culture species, which may jeopardise the capacity of the activated carbon filter to neutralise said oxidants;
   o It minimises energy consumption in the process, thereby allowing/enhancing for the economic viability of the application. To this end, there is a continuous, automatic monitoring system for the content of total ammonia nitrogen in the water, the result whereof will be used to automatically adjust the current intensity to be supplied to the reactor.

The reactor must meet the following requirements:
- On the one hand, its electrode package must be equipped with bipolar electrodes, which make it possible to operate the entire reactor at higher voltages and lower amperages. This results in a lower AC/DC current rectification requirement, which reduces the power source to be used and the cost thereof.
- Moreover, the electrode requires periodical cleaning, either by polarity inversion, cleaning with acid, or a combination of both methods, since the scales formed reduce the efficacy of the electrodes with time, and may end up completely obstructing the hydraulic channels (as the distance between the electrodes is very short, 1-9 mm) and irreversibly damaging the reactor. The periodicity of this cleaning system must be short (the polarity inversion may even be hourly), which makes it necessary to automate said process for the correct operation of the invention within its scope of application.
- The reactor must also be equipped with a flow meter or flow detector at the inlet, in order to prevent current to the electrodes without water circulating through them (pump failure, automatic valve failure or obstruction due to fouling of the reactor), which would lead to irreversible damage in the reactor.
- As a complementary element, the system should include the monitoring of the O₂, CO₂ and pH of the water, in order to prevent that any deviation from their optimal values generate quick massive mortality in the culture system.

As a result of the aforementioned characteristics, the process and the system have other capacities, which include:
- Due to the high salinity of the water in the culture circuits (sea water), the ammonium elimination reaction would favour the formation of molecular N₂ instead of nitrates. This is very important since, albeit to a lower degree than total ammonia nitrogen or nitrite, nitrate is also toxic and the accumulation thereof would eventually cause deterioration of the culture water quality. N₂ is an innocuous gas.
- It is capable of eliminating bacteria and viruses, which allows for disinfection of the water and for use in quarantine operations.
- The system may be combined with other conventional processes, such as biofilters, which would lead to lower investment costs.
- It is easily scalable, which allows for lower-scale use in applications, such as big aquariums and hatcheries, quarantine and bio-contention operations, and even live-animal transport logistics platforms - trucks, wellboats, etc. -, typically for shipment from rearing facilities to fattening facilities.

Preferably, albeit in a non-limiting manner, the pre-filtration step designed for the elimination of suspended solids from the culture water to be treated is performed by means of automatic filtration with a mesh size of 40 µm.

Preferably, albeit in a non-limiting manner, the electro-oxidation step designed for the elimination of contaminants and disinfection of the culture water is performed by means of direct and indirect oxidation processes conducted inside one or several electro-oxidation reactors hydraulically connected in parallel. Application of the regeneration system to habitual recirculating culture systems requires that each of the electro-oxidation reactors to be used treat water flow rates that may typically range between 600 m³ h⁻¹ and several thousand m³ h⁻¹. Said reactors will be equipped with electrode packages for several hundreds of hydraulic channels, in the form of anode/cathode pairs, to allow for the treatment of high flow rates. The consequent typical TAN elimination capacity per reactor may range between 1.4 kg_{TAN} h⁻¹ and over 10 kg_{TAN} h⁻¹, quantities equivalent to feed dosages ranging between close to 270 kg_{feed} day⁻¹ and more than one tonne per day. Under the conditions described, the average daily energy consumption will be less than 2.8 kWh kg_{feed}⁻¹. The scalability that characterises the system allows for the use thereof in applications that typically require much lower flow rates, as in the case of big hatcheries and/or aquariums. In these cases, regeneration of the water would require much lower treatment flow rates, with typical values of less than 10 m³ h⁻¹. In these cases, the reactors would be equipped with an electrode package made up of even shorter electrodes and with a number of hydraulic channels or anode/cathode pairs not greater than a few tens.

Preferably, albeit in a non-limiting manner, the final step, designed for the elimination of the toxic byproducts for the life of the fish generated during the electro-oxidation step includes an activated-carbon adsorption column.

In a particular embodiment, treatment of the culture water originating from a RAS-type aquaculture system is performed by means of at least one unit formed by a pre-filtration step connected to an electro-oxidation reactor, the outlet whereof is connected to an activated-carbon treatment system. The set of anode-cathode electrode pairs is subjected to the influence of an electric potential that varies as a function of the composition of the water to be treated. The final step with activated carbon is effective for the elimination of toxic substances in aquaculture, such as total chlorine.

As a result of the process described above, a stream of regenerated culture water, substantially free from the presence of toxic substances (TAN and nitrites) and byproducts (free chlorine and trihalomethanes), is obtained. In said stream, pathogen reduction (bacteria and viruses) reaches efficiencies of up to 99.9% (log 3 CFU/ml).

The process described herein entails significant progress, since it resolves, in an integrated manner, the problem associated with the treatment of culture water for the continuous regeneration of the water used in aquaculture systems. The toxic compound elimination efficacy and the adaptability to the feeding/excretion rates is improved as compared to current alternatives.

### BRIEF DESCRIPTION OF THE FIGURES

In order to facilitate a better understanding of the characteristics of the invention, in accordance with a preferred embodiment thereof, and to supplement this description, a set of drawings is attached as an integral part thereof, for illustrative, non-limiting purposes. In these drawings:
Figure 1 shows an overall flow diagram of a RAS culture system, according to an embodiment of the invention.
Figure 2 shows a diagram of the water regeneration process and system by means of electro-oxidation according to a possible embodiment of the invention.

### DETAILED DESCRIPTION OF THE INVENTION

In this text, the term "comprises" and variants thereof should not be understood in an excluding sense, i.e. these terms are not intended to exclude other technical characteristics, components or steps.

Moreover, the terms "approximately", "substantially", "about", "a few", etc. must be understood to indicate values close to those accompanying said terms, since, due to calculation or measurement errors, it is impossible to obtain those values with total accuracy.

The water originating from the culture tank are to be recirculated in the RAS aquaculture system; the water to be treated contains significant concentrations of total ammonia nitrogen and other contaminants which primarily originate from the feeding and excretion steps.

The following preferred embodiments are provided for illustrative purposes, and are not intended to limit the scope of the present invention. Moreover, the present invention covers all possible combinations of the particular and preferred embodiments specified herein. For persons skilled in the art, other objects, advantages and characteristics of the invention will arise, partly from the description and partly from the practice of the invention.

Below it is described the culture water regeneration process, whether the water is of marine origin or freshwater, in RAS systems. Specifically, the invention by means of the process and the system achieves for a close to 100% elimination of the total ammonia nitrogen and the nitrite present in the culture water thanks to the use of the electro-oxidation technology. The presence of pathogens (bacteria and viruses) is also reduced by up to 99.9% (log 3 CFU/ml).

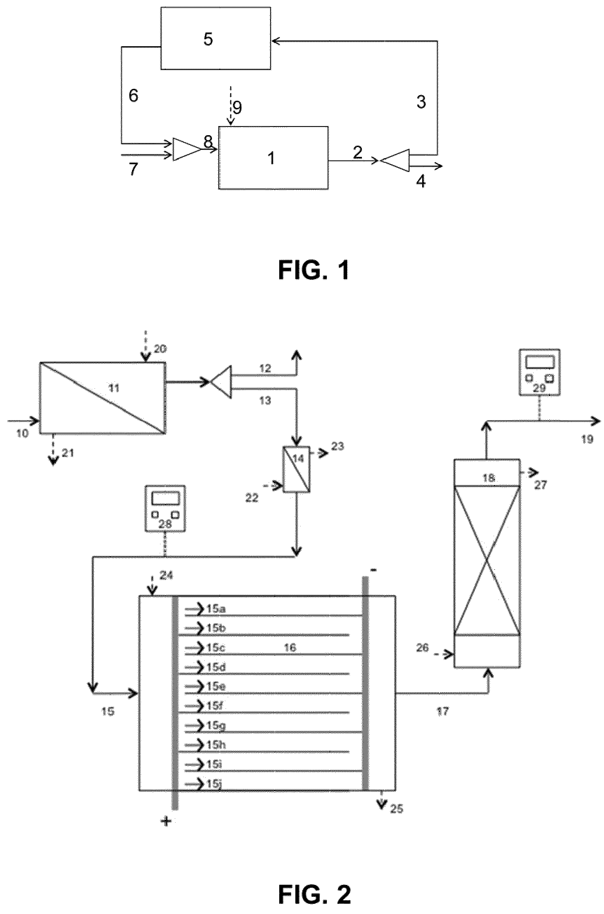

The treatment process presented is integrated within an aquaculture farm or culture system, and, as shown in the general flow diagram, illustrated in Figure 1, comprises:
- A culture tank (1), wherefrom a stream of water to be recirculated (2) exits in order to be subsequently treated and reused; a fraction of said stream of water (4) is replaced by freshening water (7); in RAS systems, said fraction of freshening water is variable.
- A regeneration system (5) that is fed by the recirculated water fraction (3) originating from the culture tank (1). The regeneration process outlet stream (6), which is free from contaminant substances (TAN and nitrite), bacteria and viruses, is once again introduced (8) into the culture tank (1), jointly with the fraction of freshening water (7). In this way, the total volume of water remains approximately constant. If necessary, the oxygen supply to the fish is performed by means of oxygenation or aeration (9) of the water in the culture tank.

Figure 2 illustrates the regeneration process and system in a detailed manner. The process incorporates a number of treatment steps adequately interconnected by means of the pertinent conduits and pump systems.

The regeneration process for the water originating from aquaculture activities comprises the following steps:
- Pre-treatment by means of filtration, with a 40-50-µm filter, of the stream of recirculated culture water (10) in a drum filter (11) designed to obtain a stream substantially free from suspended solids (12, 13). A part of the filtrated water or the totality thereof, called culture water (13), is sent to the following regeneration step, after an additional safety filtration (14) that ensures the removal of suspended solids at the outlet (15), whilst the excess fraction is returned to the culture tank (12).
- Treatment, by means of electro-oxidation in an electrochemical reactor (16), of the stream of culture water obtained in the preceding step, in order to obtain a stream of treated water (17) free from TAN, nitrites and pathogens; where the residence time in the reactor is less than 1 second.
- Treatment, in an activated-carbon packed column (18), of the stream of treated water (17) resulting from the electro-oxidation step, in order to eliminate the toxic byproducts generated during the culture water regeneration process, which produces an outlet effluent or stream (19) suitable to be sent to the culture tank (1).
- Continuous, automatic monitoring of the TAN content by means of online analytical instrumentation, specifically monitoring equipment (28) for the water at the inlet of the regeneration process, the result whereof may be used to automatically adjust the current intensity to be supplied to the reactor, in order to minimise the production of oxidation byproducts that must be neutralised by the activated-carbon post-treatment system.
- Continuous monitoring of the concentration of free chlorine/total chlorine by means of online analytical instrumentation, specifically by means of monitoring equipment for the free/total chlorine (29) at the outlet of the activated-carbon post-treatment, which makes it possible to confirm the correct operation of this process.

The filtration, electro-oxidation reactor and the activated-carbon packed column systems proposed are equipped with independent cleaning systems which have clean water inlets (20), (24) and (26), and outlets (21), (25) and (27), for the first and second filtration processes, as well as for the activated carbon, respectively, the contents whereof must be sent to a purifying plant.

The additional filtration system (14) is also equipped with an inlet (22) and an outlet (23) as independent cleaning procedures.

The electro-oxidation reactor (16) is composed of a set of anode-cathode pairs connected in parallel. The parallel configuration of the reactor allows for the stream to be treated (15) to be divided into various substreams (15a-15j) which circulate through the different hydraulic channels formed by the cell configuration proposed. Figure 2 shows an electro-oxidation reactor (16) with an example of the connection of the anode-cathode electrode pairs in parallel. The number of units connected in parallel may be increased in order to maintain the treatment quality at higher flow rates and/or concentrations.

The electro-oxidation reactor is connected to the outlet of the filtration means, and each reactor is equipped with tens or hundreds of hydraulic channels per reactor (anode-cathode pairs); moreover, the reactor inlets must be equipped with a flow meter or flow detector in order to prevent current from being supplied to the reactors when water is not circulating through them.

As a complement, the system should include the monitoring of the O₂, CO₂ and pH of the water, in order to prevent that any deviation from the optimal values generates quick massive mortality in the culture system.

In the electro-oxidation step, the reactor (16) operates in galvanostatic mode under the influence of an electric potential; the electrodes, cathodes and anodes, are connected to a power source (not illustrated in Figure 2). The selected power source periodically performs polarity inversion steps in order to prevent the deposition of precipitated salts on the active surface of the electrodes, which would reduce their treatment capacity. During this programmed operation, the electrodes modify their polarity, by cyclically alternating between the roles of anode-cathode. In an alternative or complementary manner, the electrodes may be cleaned using chemical products, using the inlet (24) and outlet streams (25) to this end. In this case, the purge stream (25) must be managed or sent to an authorised manager depending on the compounds used during the cleaning process.

According to the configuration represented in Figure 2, the stream of treated water (17), substantially exempt from TAN, nitrite and pathogens after passing through the electro-oxidation reactor (16), may contain byproducts that are toxic or harmful for the culture species, such as, for example free chlorine. The stream of treated water (17) is made to go through a vertical column containing an activated carbon bed; the carbon is exposed to the free chlorine, which results in chloride ions. Due to their nature, other toxic byproducts will be adsorbed on the surface of the activated carbon, being retained therein. Consequently, the outlet stream (19) will be free from the toxic byproducts generated.

Thus, the outlet stream (19) from the water treatment process is suitable to be reused as culture water in the aquaculture process, as it is free from contaminant substances (ammonium and nitrite), bacteria, viruses and any other byproducts generated.

As mentioned in the state of the art, currently biofilters are preferably used, the average TAN and nitrite elimination efficiency whereof typically ranges between 50%-60%. For this reason, the obtainment of a stream of water free from TAN and nitrite represents an improvement, both from the technical and the economic standpoints, since it makes possible to significantly increase the biomass density in the RAS system. Moreover, it allows for biological control of pathogens, reduces the volume of water exchanged, is easy to operate with an adjustable operation as a function of the production of contaminants, does not require a starter period and does not present reduced efficiency due to changes in the water temperature or composition.

The process described in the present invention is applicable, amongst others, to recirculating aquaculture systems; the process may be used as the only culture water regeneration system or as a system that complements an existing one; moreover, it is easily scalable and does not require the addition of chemical substances.

An example of a culture water regeneration process in aquaculture systems is described below, generated from the experimental information obtained during a pilot-scale test campaign, according to the embodiment described:

### Description of an embodiment

The operating conditions and the results obtained in an interesting variant of the invention are described below as an example:
The case study presented involves the regeneration of the culture water used in a recirculating aquaculture system that is a part of a facility devoted to the production of sea bream juveniles - an activity commonly known as a hatchery. The aforementioned system is equipped with various culture tanks, with an approximate capacity of 20 m³ each. The total volume of water in the tanks is 300 m³, typically containing a population of sea bream juveniles of 4,500 kg, which is equivalent to a biomass density of 15 kg m⁻³. The average weight of each individual during the rearing phase is 3.2 g, which means that the system contains approximately 1.4 million individuals. They are habitually fed by means of automatic feed dispensers, which distribute the feeding throughout continuous 8-10-hour periods. It is estimated that the culture system described requires 270 kg of feed per day. The highest TAN production rate coincides with the daily feeding period, and primarily arises from the fish metabolism and the degradation of the unconsumed feed. In the case described, said production rate may reach 1.35 kg_{TAN} h⁻¹, and the value decreases to 270 g_{TAN} h⁻¹ during those periods when there is no feeding with feed.

The culture tanks are connected to the regeneration system according to the diagram presented in Figure 1. The objectives of the regeneration are: i) to minimise the freshening water supplied to the system and the consequent production of an equivalent quantity of wastewater to be treated in a purifying plant; ii) to maintain the water quality in the culture circuits at optimal values, with the minimum possible recirculation flow rate to be treated, even under culture conditions with greater biomass densities than the usual ones.

In order to maintain the concentration of suspended solids at optimal values, the recirculation flow rate to be sent to the filtration unit, according to Figure 1, would typically reach 600 m³ h⁻¹. Once it has been filtrated, the water would pass through one or several electrochemical reactors hydraulically connected in parallel, each with an approximate total length of 1 m, which would typically have a total of 600 hydraulic channels overall, in the form of anode-cathode pairs. The distance between the electrodes would range between 1 and 10 mm. The residence time of the water inside the reactor would range between 0.3-1 seconds. The water at the outlet of the electrochemical treatment would be almost completely free from TAN and nitrites, which also minimises the formation of nitrates during the process. Moreover, a significant disinfection effect and a significant reduction in the soluble organic load in the treated water would be achieved. At the water regeneration system inlet, the TAN content would be automatically determined and the information on the concentration would be sent to the logic control programmer (LCP), such that the latter may adjust the necessary energy to be supplied to the electrochemical system, which allows for the optimisation thereof. Thus, the estimated energy consumption of the set of electrochemical reactors would be less than 2.8 kWh kg_{feed}⁻¹. Finally, the outlet water from the set of electrochemical reactors would be treated by means of activated carbon filters, hydraulically connected in parallel, in order to eliminate any resulting toxic byproduct. Before returning the regenerated water to the culture tanks, their innocuousness would be continuously checked by monitoring the free chlorine/total chlorine, using an automatic system which would send a warning to the LPC when the result is not a complete absence of these compounds. Said situation would arise as a result of a poor operation of the activated carbon filters.

The water regeneration system described in the present embodiment makes it possible to eliminate the TAN and the nitrites with a higher efficiency than the conventional regeneration systems that are currently used in the recirculating aquaculture industry. This improvement in efficiency translates into the need to pump 40% less filtrated water to the set of electrochemical reactors than the necessary equivalent in a conventional biofilter system. Comparatively, this difference makes it possible to increase the biomass density in the existing culture tanks by up to 30%, considering the same recirculation flow rate of filtrated water in both cases. Finally, unlike regeneration systems based on biofilters, the TAN and nitrite elimination process described in this embodiment minimises the formation of nitrates, thereby reducing the need to supply freshening water to the culture system and the consequent equivalent production of wastewater to be treated.

## Claims

1. Continuous water regeneration process in semi-closed circuits for the recirculating aquaculture industry, **characterised in that** it comprises the following steps:
- Pre-treatment, by means of filtration, of the stream of recirculated culture water (10), designed to obtain a stream substantially free from suspended solids (12, 13);
- Treatment, by means of electro-oxidation, of the stream of culture water (13) obtained in the preceding step, in order to obtain a stream of treated water (17) free from ammonium, nitrites and pathogens, wherein the residence time in the reactor is less than 1 second.
- Treatment, by means of activated carbon, of the stream of treated water (17) resulting from the electro-oxidation step, in order to eliminate the substances that are toxic for the culture species generated during the culture water regeneration process.
- Continuous analysis of the concentration of free chlorine/total chlorine at the outlet of the activated-carbon post-treatment.
- Continuous, automatic monitoring of the total content of total ammonia nitrogen (TAN) in the water, the result whereof will be used to automatically adjust the current intensity to be supplied to the electrochemical process, wherein the ammonium content in the water used is less than 1 mg/l.

2. The process of claim 1, wherein the pre-treatment step is performed by means of filtration with a mesh size of about 40 µm.

3. The process of claim 2, wherein the pre-treatment step comprises a first filtration by means of a first filter (11), wherefrom a stream of pre-treated culture water arises which is subjected to a second filtration (14), in order to obtain a stream of water to be treated (15) that is introduced into the electro-oxidation reactor (16).

4. The process of claim 3, wherein the first and the second filtration are equipped with independent cleaning systems.

5. The process of claim 3, wherein the electro-oxidation step is performed by means of at least one reactor (16), typically equipped with tens or hundreds of anode-cathode pairs. The stream of previously filtrated culture water circulates through said electrode pairs, and the set of anode-cathode pairs is subjected to the influence of a variable current density, as a function of the concentration of total ammonia nitrogen to be eliminated.

6. The process of claim 5, wherein the electro-oxidation reactor (16) is equipped with a feeding source that periodically performs polarity inversion steps, such that the electrodes exchange their polarity, cyclically alternating between the roles of anode-cathode. In a complementary or alternative manner, the periodical cleaning of the electrodes may be performed by means of a chemical process, using acids or bases.

7. The process of claims 5 or 6, wherein the current density applied to the electro-oxidation reactor is controlled as a function of the concentration of total ammonia nitrogen in the culture tank.

8. The process according to any of the preceding claims, wherein the water originating from aquaculture activities is sea water.

9. The process according to any of the preceding claims, wherein the water originating from aquaculture activities is freshwater.

10. System for the application of the continuous water regeneration process in semi-closed circuits for the recirculating aquaculture industry according to any of claims 1 to 9, **characterised in that** it comprises:
- filtration means for the elimination of suspended solids,
- an electro-oxidation reactor (16) connected to the outlet of the filtration means, wherein each reactor is equipped with tens or hundreds of hydraulic channels per reactor (anode-cathode pairs). Moreover, the inlets to the reactors are equipped with a flow meter or flow detector in order to prevent current from being supplied to the reactors when water is not circulating through them,
- an activated carbon column connected to the electro-oxidation reactor outlet.

11. Regeneration system according to claim 10, wherein the filtration means designed for the elimination of suspended solids comprise:
- a first filtration in order to eliminate suspended solids, wherefrom a stream of pre-treated culture water arises (13),
- a second safety filtration, wherefrom a stream of water to be treated (15) arises which is introduced into the electro-oxidation reactor (16).

12. Regeneration system according to claim 11, wherein the filtration means have independent cleaning systems, equipped with cleaning water inlets (20) and (22), and outlets (21), (23) for the first and second filtration processes, respectively.

13. Regeneration system according to claim 10, wherein the electro-oxidation reactor (16) comprises:
- a set of anode-cathode pairs connected in parallel, such that the stream to be treated (15) is divided into various substreams (15a-15j) which circulate through the different hydraulic channels formed by the cell configuration proposed.
- a feeding source that periodically performs polarity inversion steps in order to prevent the deposition of precipitated salts on the active surface of the electrodes.

14. System according to any of the preceding claims, wherein the system is equipped with means to monitor the O₂, CO₂ and pH of the water.

## Amended claims

### Amended claims in accordance with Rule 137(2) EPC.

1. Continuous water regeneration process in semi-closed circuits for the recirculating aquaculture industry where the total ammonia nitrogen content in the culture water is less than 1 mg/l, **characterised in that** it comprises the following steps:
- Pre-treatment, by means of filtration, of the stream of recirculated culture water (10), designed to obtain a stream substantially free from suspended solids (12, 13);
- Treatment, by means of electro-oxidation, of the stream of culture water (13) obtained in the preceding step, in a reactor (16) equipped with tens or hundreds of hydraulic channels in the form of anode-cathode pairs connected in parallel so that the stream to be treated (15) is divided into various substreams which circulate through the different hydraulic channels wherein the residence time in the reactor (16) is less than 1 second.
- Treatment, by means of activated carbon, of the stream of treated water (17) resulting from the electro-oxidation step, in order to eliminate the substances resulting from the electro-oxidation step that are toxic for the culture species generated during the culture water regeneration process.
- Continuous analysis of the concentration of free chlorine/total chlorine at the outlet of the activated-carbon post-treatment in order to confirm the correct operation of this process.
- Continuous, automatic monitoring of the total content of total ammonia nitrogen (TAN) in the water at the inlet of the reactor (16), the result whereof will be used to automatically adjust the electrical current intensity to be supplied to the electrochemical process.

2. The process of claim 1, wherein the pre-treatment step is performed by means of filtration with a mesh size of 40 µm.

3. The process of claim 2, wherein the pre-treatment step comprises a first filtration by means of a first filter (11), wherefrom a stream of pre-treated culture water arises which is subjected to a second filtration (14), in order to obtain a stream of water to be treated (15) that is introduced into the electro-oxidation reactor (16).

4. The process of claim 3, wherein the first and the second filtration are equipped with independent cleaning systems.

5. The process of claim 3, wherein the electro-oxidation step is performed by means of at least one reactor (16), typically equipped with tens or hundreds of hydraulic channels in the form of anode-cathode pairs; the stream of previously filtrated culture water circulates through said hydraulic channels, and the set of the hydraulic channels in the form of anode-cathode pairs is subjected to the influence of a variable electrical current density, as a function of the concentration of total ammonia nitrogen to be eliminated.

6. The process of claim 5, wherein the electro-oxidation reactor (16) is equipped with a feeding source that periodically performs polarity inversion steps, such that the electrodes exchange their polarity, cyclically alternating between the roles of anode-cathode. In a complementary or alternative manner, the periodical cleaning of the electrodes is performed by means of a chemical process, using acids or bases.

7. The process of claims 5 or 6, wherein the electrical current density applied to the electro-oxidation reactor is controlled as a function of the concentration of total ammonia nitrogen in the culture tank.

8. The process according to any of the preceding claims, wherein the water originating from aquaculture activities is sea water.

9. The process according to any of the preceding claims, wherein the water originating from aquaculture activities is freshwater.

10. System for the application of the continuous water regeneration process in semi-closed circuits for the recirculating aquaculture industry according to any of claims 1 to 9, **characterised in that** it comprises:
- filtration means for the elimination of suspended solids,
- an electro-oxidation reactor (16) connected to the outlet of the filtration means, wherein each reactor is equipped with tens or hundreds of hydraulic channels per reactor in the form of anode-cathode pairs connected in parallel. Moreover, the inlets to the hydraulic channels are equipped with a flow meter or flow detector in order to prevent electrical current from being supplied to the hydraulic channels when water is not circulating through them,
- an activated carbon column connected to the electro-oxidation reactor outlet.
- a monitoring equipment (28) for automatic monitoring of the TAN at the inlet of reactor (16),
- a monitoring equipment for the free/total chlorine (29) at the outlet of the activated-carbon column.

11. Regeneration system according to claim 10, wherein the filtration means designed for the elimination of suspended solids comprise:
- a first filtration in order to eliminate suspended solids, wherefrom a stream of pre-treated culture water arises (13),
- a second safety filtration, wherefrom a stream of water to be treated (15) arises which is introduced into the electro-oxidation reactor (16).

12. Regeneration system according to claim 11, wherein the filtration means have independent cleaning systems, equipped with cleaning water inlets (20) and (22), and outlets (21), (23) for the first and second filtration processes, respectively.

13. Regeneration system according to claim 10, wherein the electro-oxidation reactor (16) comprises:
- a set of anode-cathode pairs connected in parallel, such that the stream to be treated (15) is divided into various substreams (15a-15j) which circulate through the different hydraulic channels formed by the cell configuration proposed.
- a feeding source that periodically performs polarity inversion steps in order to prevent the deposition of precipitated salts on the active surface of the electrodes.

14. System according to any of the preceding claims, wherein the system is equipped with means to monitor the O₂, CO₂ and pH of the water in the culture tank (1).
